# EUROPEAN PATENT APPLICATION

(11) **EP 0 773 664 A2**
(43) Date of publication of application: **14.05.1997**
(21) Application number: 96118216.9
(22) Date of filing: 13.11.1996
(51) Int. Cl.: H04N 1/32

(54) **Method and apparatus for providing status information of facsimile transmissions**

(30) Priority: 13.11.1995 US 554957
(71) Applicant: AT&T Corp., New York, NY 10013-2412 (US)
(72) Inventor: Gupta, Alok K., Marlboro, NJ 07746 (US)
(74) Representative: KUHNEN, WACKER & PARTNER

(57) **Abstract**

In a network-based system, status information relating to facsimile transmissions is provided to a facsimile user. A network-based platform accesses a transaction database which stores facsimile transmission status parameters. Based on the unique identity of the facsimile user, a customer needs database which contains user-related format information is accessed to provide the status information to the facsimile user at selected time intervals and through user-selected media such as electronic mail, voice mail and/or in printed form.

## Description

### BACKGROUND OF THE INVENTION

### I. Field of the Invention

The present invention generally relates to transmissions of data by facsimile. More particularly, the invention pertains to a method and apparatus for providing status information of facsimile transmissions to users. Most particularly, this invention is directed to a system for providing, to a facsimile user, status information such, for example, as error signals, re-dial data, etc., in accordance with preselected user specifications.

### II. Description of the Related Art

Facsimile machines are widely used. Most, if not all facsimile machines generate a status report at the conclusion of a transmission attempt to indicate, typically in the form of a stored or printed report, whether a particular transmission was successful, the time at which the transmission commenced, and terminated, etc. More advanced facsimile machines may include a re-dial feature for automatically re-dialing an addressee's facsimile number which generated a busy signal during an earlier transmission attempt. Such re-dialing attempts typically occur for a preset number of times during a designated time interval immediately following an unsuccessful transmission attempt (i.e. ten attempts within five minutes). If the transmission is still unsuccessful after the time interval expires, an error report is usually printed by the facsimile machine. Such re-dialing facsimile machines, upon successful connection after re-dial, will cancel any future re-dial attempts even if the successful connection results in an error. The printed error reports by facsimile machines typically indicate the time of the first attempt as well as the status of the transmission, i.e. unsuccessful, successful, etc.

In addition to the above, several network services for use with facsimile machines are available. These services offer advanced features such as multicasting of facsimile transmissions of data (letters, files, etc.) to a plurality of facsimile terminal devices and also allow for delayed delivery of facsimile information, i.e. scheduled transmission to a destination user or addressee at a later specified time. Such facsimile services are commonly accessed by calling or dialing a network based platform or a fax store and forward service platform. In a multicast situation, a user will provide the platform with a list of the intended recipients' facsimile numbers and the data to be transmitted, and the platform will then send the data to each of the multiple parties. A drawback that all heretofore known facsimile systems and machines have in common is that none provide a status report indicating the number of attempts made before successful transmission or unsuccessful completion. Thus, in the event of an unsuccessful connection attempt, a user would typically only be provided with a written or printed status report indicating an error, or indicating an error in combination with the total number of successfully transmitted pages, if any. In other words, the status information provided by such prior art facsimile devices is traditionally limited to a written report as opposed to, for example, a voice or E-mail report, and the status information would not include information identifying the total number of attempts that were made before successful or unsuccessful transmission occurred. Also, such status reports are only provided at the end of a successful transmission or at the end of a preset time period allotted for each transmission, i.e. the re-dial time. The availability of such information at more regular time intervals would be valuable in many circumstances where, for example, a user's efforts to provide another with a copy of a particular document are questioned. In such an instance, the user can in accordance with the present invention produce a record indicating, *inter alia*, how many transmission attempts were made, the result of each attempt, and the time and date of each attempt.

### SUMMARY OF THE INVENTION

Accordingly, it would be desirable for a facsimile system to generate and provide status information to a user pertaining to successful and unsuccessful facsimile transmission attempts, in addition to notification of successful delivery. It would also be desirable were such status information available at preselected time intervals and in a variety of media such as voice, text, etc.

The present invention is directed to a method and apparatus for providing, in a communication network, a facsimile user with status information pertaining to facsimile transmissions and transmission attempts. The inventive method includes the steps of identifying an address location of the recipient user facsimile device, which usually corresponds to or is related to the user's facsimile telephone number, and determining, based on that telephone number, the identity of the user. A transaction database is provided for storing status parameters indicative of the status of the in-progress facsimile transmission and for accessing, based on the determined user's identity, a customer needs or preferences database for providing the user with the status parameters at preset time intervals and in a predetermined medium. This allows the user to be informed of useful and detailed status information of facsimile transmissions in addition to typical status information such, for example, as successful transmission and error indications.

In a preferred embodiment, the method provides the user with status information in the form of either a voice mail message, an electronic (E-mail) message or a facsimile report. In another preferred embodiment, the status information is provided at specified time intervals selected by the user in the customer needs database, e.g. at five minute intervals, etc.

The method also defines the status parameters of transaction data as including the identity of the user, the address or addresses of the destination devices, a time indicating the commencement of the transaction, and receipt status or error status indicating the progress of the intended transmission of data to the destination devices.

The inventive apparatus of the current invention provides, in a communication network, a facsimile user with transaction status information of an attempted facsimile transmission of data transmitted by a user facsimile device to a destination facsimile device. The apparatus includes an identification unit for identifying an address location of the facsimile user and for determining, based on the identified address, the identity of the user. The apparatus also includes a transaction database connected to the identification unit and having memory for storing status parameters indicative of the status of an in-progress facsimile transmission attempt. A customer needs or preferences database is also included and is connected to the identification unit. The customer needs database has a memory for storing a plurality of sets of preference parameters corresponding to the facsimile user, for providing the status parameters to the user in accordance with the user's preference, such as providing the user with status information in a particular medium at a particular time interval, e.g. every two hours, etc.

In a preferred embodiment, the customer needs database is connected to the transaction database and is accessed thereby upon determination of the identity of the user.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### BRIEF DESCRIPTION OF THE DRAWINGS

FIG. 1 is a block diagram of an apparatus for providing facsimile transmission status information in accordance with the present invention;
FIG. 2 is a structured data representation of a customer needs database; and
FIG. 3 is a structured data representation of a transaction database.

### DETAILED DESCRIPTION OF THE PRESENTLY PREFERRED EMBODIMENTS

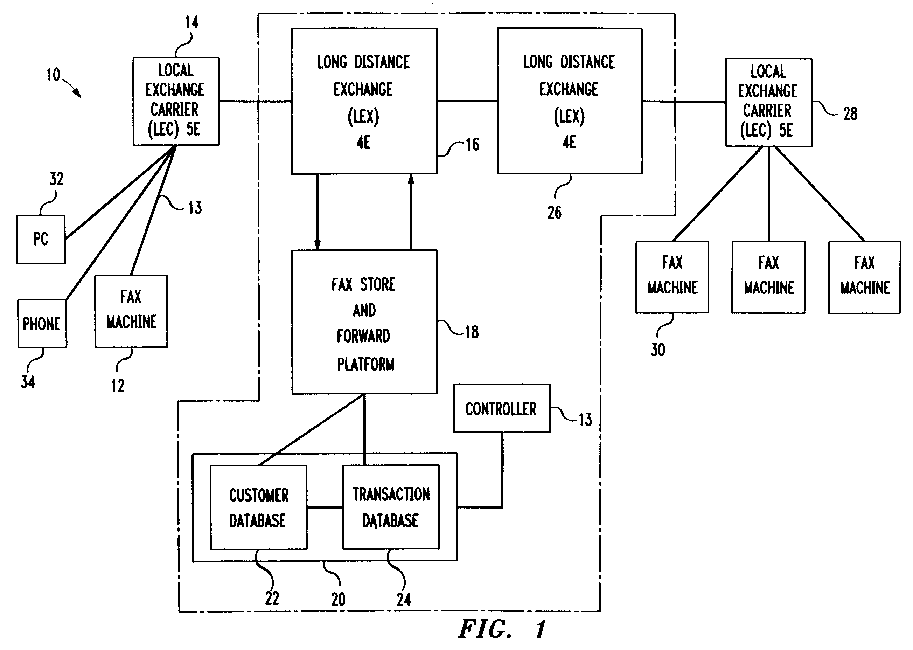

Referring now to the drawings, and initially to FIG. 1 thereof, an apparatus for providing status information of facsimile transmissions to a user in accordance with the invention is designated by the general reference numeral 10. As shown, the apparatus 10 has a user terminal device, such as a facsimile machine 12, connected to and communicatably interfaced with a local exchange carrier (LEC) 14 such as an AT&T 5E switching station, through a standard telephone line 13, as is well known to those of ordinary skill in the art. LEC 14 is, in turn, connected to a toll or long distance exchange (LEX) 16 such as an AT&T 4E switching network which interfaces with a fax store and forward platform 18. Platform 18 provides facsimile user network subscribers access for transmitting facsimile transmitted data to other facsimile devices. Typical platform features include multicasting wherein a single facsimile transmission can be provided to a plurality of facsimile devices, and delayed transmission wherein data is transmitted at a specified later time to one or more destination facsimile devices.

With continued reference to FIG. 1 and in accordance with the present invention, platform 18 is connected to or interfaced with a memory unit 20 housing or containing a customer needs database 22 and a transaction database 24, which may also be connected to each other, to provide platform 18 with status information relating to in-progress facsimile transmissions sent from device 12. Information stored in the databases is accessed by a controller 13 which may be a designated hardware unit or, alternatively, a software instruction or program. The operation and use of the databases 22 and 24 will be described more fully below. LEX 16 is connected to a destination LEX 26 that is also connected to a destination LEC 28 having a plurality of destination facsimile devices 30 interfaced therewith which may be at different locations from each other.

When a user at facsimile device 12 desires to send a facsimile transmission to a recipient at a "long distance" location, i.e. a toll call, the user will input the phone number of the recipient's facsimile device 30 into the user's facsimile device 12, whereupon the LEC 14 will access and connect to LEX 16 which provides access to the fax store and forward platform 18. LEX 16 also connects to LEX 26, the long distance exchange to which the destination device 30 is connected. LEX 26 completes the call transmission path or route by connecting destination device 30 to LEC 28. It should be understood that in the event of a local call, for example, the destination LEX 26 would not be required and the destination device 30 would instead be directly connected to LEX 26 via LEC 28.

When a call is placed on or from user device 12, the address of the user device is determined by the fax store and forward platform 18. Alternatively, the user's address can be determined via automatic number identification (ANI) performed, as is known in the art, by the network to which the user's facsimile device 12 is connected. The address is associated with and thereby identifies the particular user and that particular user's pre-stored format file which is stored or maintained in the customer needs database 22. In other words, at the time a user subscribes to a network-based fax forward service, the user will specify information for the user's format file. The format file includes information such, for example, as the time intervals at which that user requires status information (e.g. 5 minutes, 10 minutes, etc.) as well as the media and/or format in or by which the status information is to be presented or conveyed. For example, a user may wish to receive the status information at 5 minute intervals on the user's personal computer (PC) terminal 32 -- which is connected to LEC 14 -- as an electronic mail (E-mail) message or, orally as a voice mail message delivered to a telephone 34, which is also connected to LEC 14. Alternatively, the user may request a facsimile-transmitted printed report indicating the status of the in-progress facsimile transmission. Thus, if a facsimile transmission destination phone number is "busy", while the user's facsimile machine is redialing (assuming automatic redialing functionality), the user could be provided, in a preselected manner via the fax store and forward platform 18, with regularly updated status information indicating the number of connection attempts made as well as the status of each attempt.

As an alternative embodiment, a user may be assigned an identification number which is input to the network prior to a facsimile attempt. The identification will identify the user with that user's pre-stored format file. Thus, if a user is sending a facsimile transmission from another person's facsimile device, the user will still be provided with status information according to the user's format file. In addition to an identification number, a personal identification number (PIN) may be used for security purposes to limit access of a format file to the intended and corresponding user.

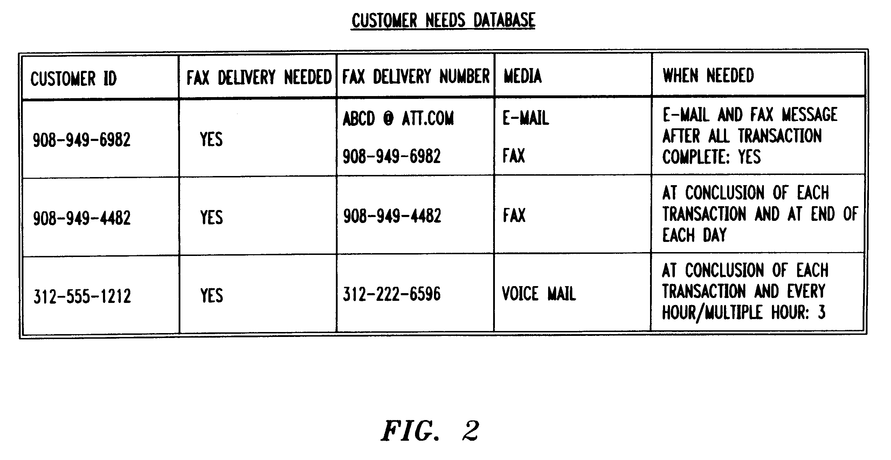

FIG. 2 depicts a structural representation of a suitable customer needs or preferences database 22. As shown, the customer needs database contains several varieties or categories or fields of information such, for example, as a unique customer identifier, an indication of the type of fax delivery status information requested, the destination phone number, i.e. the phone number address of the destination fax machine, the type of media through which the status information is to be provided, and a time interval identifying the duration or interval at which status information is to be conveyed to the user. For example, for that user with customer identification No. 908-949-6982, the customer needs database indicates that the user has requested fax delivery information and that such status information be provided via E-mail at the user's E-mail address, i.e. ABCD @ ATT.COM, as well as to that user's facsimile device 12. In addition, that user requires that the status information be delivered after all transactions are complete, as opposed to status information sent at preset time intervals. Thus, in the case of a multicast request to transmit an identical facsimile transmission to more than one recipient, status information is only provided to this user upon successful completion of the transmission to the last of the multiple recipients. On the other hand, another customer identified by ID 312-949-4482 has also requested fax delivery of status information but that it be provided by fax at the conclusion of each transaction attempt, whether or not successful, as well as at the end of each day. Although the user's facsimile device address (i.e. the facsimile number) is specified as the address of the device where the status information is directed, it should be readily understood that other addresses can, likewise, be provided without falling outside the scope of the present invention. Still another user, ID 312-555-1212 has requested that status information be transmitted by voice mail at the conclusion of each transaction and/or at every three-hour interval. In addition, some users may request that no status information be provided

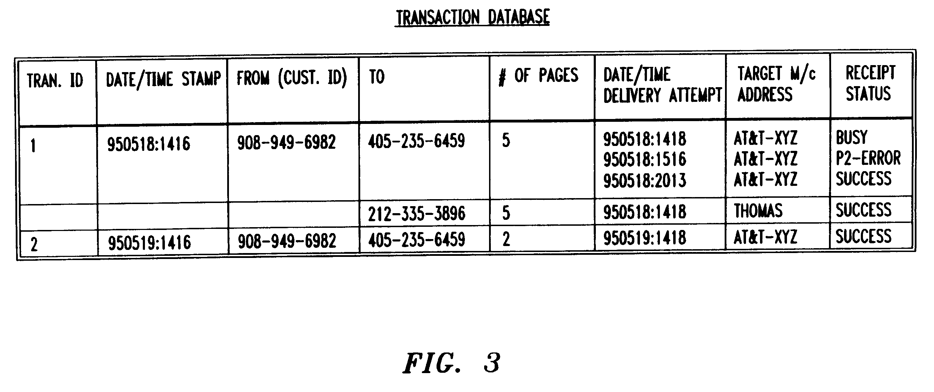

FIG. 3 depicts a structural representation of a transaction database 24. As there shown, the transaction database contains transaction information pertaining to the time and date at which each facsimile transmission commenced, the identity of the sender or provider, the address or identity of the destination terminal device, the number of pages of the facsimile transmission, the date and time of delivery or attempted delivery, the address of the recipient, and the receipt or transmission attempt status. For example, transaction identification number 1 in FIG. 3 represents a multicast request in which the identical five-page facsimile transmission was communicated to two recipients, one at phone number 405-235-6459 and one at 212-335-3896. The facsimile transmission originated from a user having customer identification number 908-949-6982, and the transmission initially commenced on May 18, 1995 at 2:16 pm. The transmission was successfully provided to the second destination (312-335-3896) on the first attempt and was successfully completed at 2:18 pm., as indicated by the notation in the receipt status column or field. On the other hand, the first intended recipient (ID 405-235-6459) required three attempts for a successful transmission; the first was terminated at 2:18 p.m. because of a busy signal at the recipient's facsimile device, the second was terminated at 3:16 p.m. at which time only two pages had been sent before an error signal was generated, and the final and successful transmission attempt terminated at 8:13 p.m., whereupon the receipt status field or column was updated to indicate a successful transmission. It should be noted that for the second attempt, the network protocol may supply the reason for the error along with the error status. Thus, if the reason for the error is that the destination facsimile is out of paper, this information will prompt the sending user to inform the destination user of this problem.

As pointed out above, facsimile status information conveyed at regular time intervals is useful in many situations such, for example, as when a recipient claims that a facsimile transmission was not sent at the desired or required time; in such circumstances, the transaction database report will indicate otherwise. That is, the report may evidence that the transmission was attempted at the desired time but that, due to an ongoing use of the recipient's fax machine, a busy signal or an error signal was encountered or generated. Thus, the present invention advantageously provides to users status information of facsimile transmissions to apprise such users of the then current status of in-progress facsimile transmission attempts.

Thus, while there have been shown and described and pointed out fundamental novel features of the invention as applied to the preferred embodiments thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. It is the intention, therefore, to be limited only as indicated by the scope of the claims appended hereto.

## Claims

1. A method of providing, in a communications network, a sending facsimile user having a known identity with status information for an attempted facsimile transmission from a sending user facsimile device to a destination facsimile device, said method comprising the steps of:
storing, in a transaction database connected to the communications network, status information indicative of the status of the facsimile transmission attempt of data to the destination facsimile device;
accessing, based on the sending user identity, a customer needs database that stores for the sending user customer-selected preferences pertaining to status information delivery; and
conveying to the sending user, through the communications network the stored status information for the attempted facsimile transmission in accordance with the customer-selected preferences.

2. The method of claim 1, wherein said customer-selected preferences comprise a selected time designation in accordance with which status information is to be conveyed to the sending user.

3. The method of claim 1, wherein said customer-selected preferences comprise a predetermined media type through which the status information is to be conveyed to the sending user.

4. The method of claim 2, wherein said customer-selected preferences further comprise a predetermined media type through which the status information is to be conveyed to the sending user.

5. The method of claim 4, wherein said predetermined media is selected from voice mail, electronic mail and facsimile transmitted printed reports.

6. The method of claim 1, wherein said status information comprises at least one of the sending user address location, a representation of an address of the destination facsimile device, a time at which the transmission commenced, and a status indication of receipt by the destination facsimile device of the transmission.

7. The method of claim 5, wherein said status information comprises at least one of the sending user address location, a representation of an address of the destination facsimile device, a time at which the transmission commenced, and a status indication of receipt by the destination facsimile device of the transmission.

8. An apparatus for providing, in a communications network, a sending facsimile user having a known identity with transaction status information for a facsimile transmission attempt of data to be transmitted from a facsimile device of the sending user to a destination facsimile device, said apparatus comprising:
a transaction database connected to the communications network and having a memory for storing status information indicative of the status of the facsimile transmission attempt of data from the sending facsimile device to the destination facsimile device;
a customer needs database connected to said identification unit and having a memory for storing a set of customer-selected preference parameters pertaining to status information delivery for the sending user; and
means for conveying to the sending user using the stored preference parameters, the stored status information for the facsimile transmission attempt.

9. The apparatus of claim 8, wherein said customer-select preference parameters comprise a select time designation at which status information for a facsimile transmission attempt is to be conveyed to the sending user.

10. The apparatus of claim 8, wherein said customer-select preference parameters comprise a predetermined media type through which the status information is to be conveyed to the sending user.

11. The apparatus of claim 9, wherein said customer-select preference parameters further comprise a predetermined media type through which the status information is to be conveyed to the sending user.

12. The apparatus of claim 8, wherein said customer needs database is connected to said transaction database.

13. The apparatus of claim 8, wherein said status parameters comprise at least one of said user identification, a representation of an address of the destination device, a time at which the transmission commenced, and a status indication of receipt by the destination facsimile device of the transmission.

14. The apparatus of claim 11, wherein said predetermined media type of said preference parameters comprises one of voice mail, electronic mail and a printed report.
